# FASCICULE DE BREVET EUROPEEN

(11) **EP 3 956 218 B1**
(45) Date de publication et mention de la délivrance du brevet: **30.08.2023**
(21) Numéro de dépôt: 20725789.0
(22) Date de dépôt: 10.04.2020
(51) Int. Cl.: B64C 27/08, B64D 27/02

(54) **SYSTÈME PROPULSIF HYBRIDE ET PROCÉDÉ DE CONTRÔLE D'UN TEL SYSTÈME**
HYBRIDANTRIEBSSYSTEM UND VERFAHREN ZUR STEUERUNG EINES SOLCHEN SYSTEMS
HYBRID PROPULSION SYSTEM AND METHOD FOR CONTROLLING SUCH A SYSTEM

(30) Priorité: 16.04.2019 FR 1904034
(43) Date de publication de la demande: 23.02.2022
(73) Titulaire: Safran Helicopter Engines, 64510 Bordes (FR)
(72) Inventeur: VIVE, Loïs Pierre Denis, 77550 MOISSY-CRAMAYEL (FR); KLONOWSKI, Thomas, 77550 MOISSY-CRAMAYEL (FR); SERGHINE, Camel, 77550 MOISSY-CRAMAYEL (FR)
(74) Mandataire: Gevers & Orès
(86) Numéro de dépôt international: PCT/FR2020/000116
(87) Numéro de publication internationale: WO 2020/212656

(56) Documents cités:
- EP-A1- 0 556 593
- WO-A2-03/106828
- CA-A1- 3 038 299
- CN-A- 104 791 192
- KR-U- 20080 001 344

## Description

### Domaine technique de l'invention

L'invention concerne un système propulsif hybride pour un aéronef à voilure tournante multi-rotors, et un aéronef comportant un tel système propulsif hybride.

### Arrière-plan technique

L'état de la technique comprend notamment les documents CA-A1-3 038 299, EP-A1-0 556 593 A1 et WO-A2-03/106828.

Il est connu de l'état de la technique un système de génération de puissance hybride d'un aéronef, communément appelée hybridation série, avec une génération de puissance thermoélectrique.

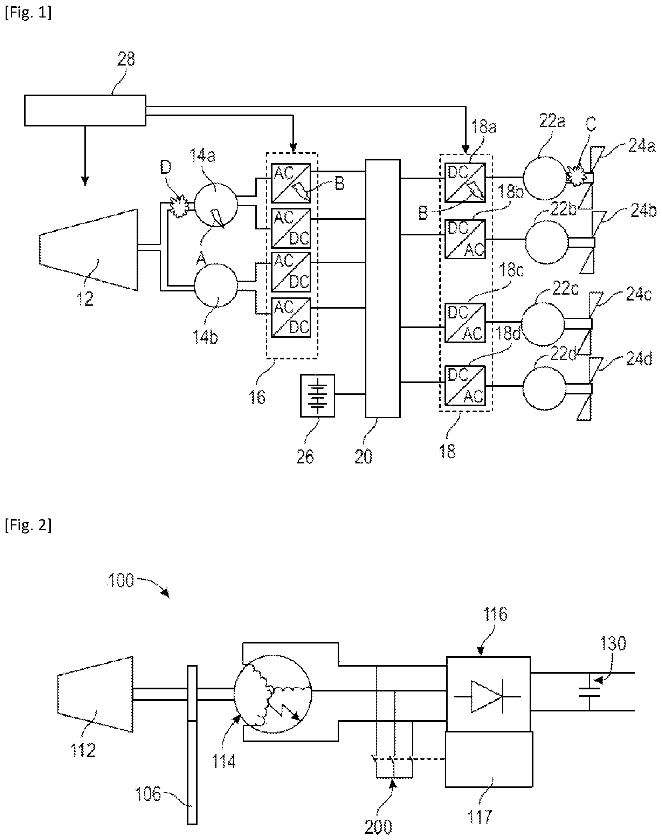

Comme représenté en figure 1, un tel système hybride comporte généralement :
- un moteur 12 à combustion interne, par exemple une turbine à gaz,
- au moins une machine électrique, par exemple un générateur électrique 14a, 14b, également appelé génératrice électrique, accouplé au moteur 12 à combustion interne de sorte qu'en fonctionnement le moteur 12 à combustion interne entraîne le générateur électrique 14a, 14b,
- un ensemble de convertisseur de puissance nommé « redresseur » 16 relié au générateur électrique 14a, 14b et configuré pour convertir un courant alternatif délivré par le générateur électrique 14a, 14b en un courant continu,
- des moyens de conversion 18 du courant continu en courant alternatif,
- un réseau électrique 20 reliant les redresseurs 16 aux moyens de conversion 18,
- des moteurs électriques 22a, 22b, 22c, 22d reliés au moyens de conversion 18a, 18b, 18c, 18d de sorte qu'en fonctionnement les moyens de conversion alimentent les moteurs électriques en courant alternatif, et
- des hélices 24a, 24b, 24c, 24d accouplées aux moteurs électriques 22a, 22b, 22c, 22d de sorte qu'en fonctionnement les moteurs électriques 22a, 22b, 22c, 22d entraînent les hélices 24a, 24b, 24c, 24d.

La turbine à gaz 12 comprend une turbine libre liée mécaniquement au générateur électrique 14a, 14b, et entraîne la ou les machines électriques, via des organes de transmission mécanique.

Le réseau électrique 20 comporte généralement un bus de courant continu haute tension (connu sous l'acronyme HVDC de l'expression anglaise « High Voltage Discret Current »).

Dans un tel système, à partir d'une source de carburant fossile, le moteur 12 à combustion interne, et via une conversion mécanique-électrique, par le générateur électrique 14a, 14b, une chaîne de propulsion électrique composée par les moyens de conversion 18, les moteurs électriques 22a, 22b, 22c, 22d et les hélices 24a, 24b, 24c, 24d, permet de faire voler un aéronef à multi-voilures tournantes.

Le système comporte une unité de stockage 26 qui a une fonction de réserve d'énergie électrique. L'unité de stockage 26 permet d'assurer une redondance dans la fourniture d'énergie électrique dans le cas où la turbine à gaz deviendrait non opérationnelle. De plus, l'unité de stockage 26 peut être utilisée pour stabiliser la tension du bus HVDC, et donc de garder la contrôlabilité des hélices 24a, 24b, 24c, 24d.

Le système comporte également un régulateur 28 configuré pour réguler le couple et la vitesse de la turbine à gaz 12, pour assurer le pilotage de l'ensemble redresseur 16 et des moyens de conversion 18, ainsi que la régulation de la vitesse et du couple au niveau de l'hélice de propulsion.

Dans certaines applications, une diminution soudaine de la demande de puissance électrique, volontaire ou liée à une défaillance, entraine une augmentation brusque de la vitesse du rotor de la turbine à gaz, et donc pouvant dans certains cas mener à une survitesse de ce dernier. L'augmentation de vitesse est proportionnelle au niveau de baisse de la charge.

Le temps de réaction de la chaîne de régulation des turbines à gaz ne permet toutefois pas toujours de maintenir l'excursion de vitesse en dessous de la valeur permettant de garantir l'intégrité des pièces mécaniques tournantes telles que les disques de turbine. Ceci peut alors conduire à un éclatement et à la libération de débris de haute énergie. Un tel évènement n'est toutefois pas toléré dans le domaine aéronautique.

Dans le cas d'une turbine à gaz d'hélicoptère, l'événement principalement redouté est la rupture de la transmission entre la turbine à gaz et la boite de transmission principale de l'hélicoptère. Cette rupture entraine une baisse totale du couple résistant sur l'arbre de la turbine de manière quasi instantanée.

Dans le cas d'un système propulsif hybride d'aéronef, les cas de panne peuvent être multiples :
- perte d'un ou d'une pluralité de bobinages d'une machine électrique 14a (illustré par la flèche A sur la figure 1),
- perte complète d'une ou d'une pluralité de machines électriques 14a (illustré par la flèche A sur la figure 1),
- perte, c'est-à-dire un circuit ouvert, d'un ou d'une pluralité de bras constituant les composants d'électronique de puissance, tel que le redresseur 16, ou les moyens de conversion 18 nommé onduleur (illustré par les flèches B sur la figure 1),
- perte, c'est-à-dire un circuit ouvert, d'un consommateur, tel qu'une hélice 24a (illustré par l'élément C sur la figure 1),
- rupture de la transmission entre la turbine à gaz 12 et un générateur électrique 14a (illustré par l'élément D sur la figure 1).

En condition normale d'utilisation, un tel système est généralement conçu pour éviter les baisses brutales de demande de puissance.

Il est connu d'utiliser une chaîne de régulation de carburant configurée pour réagir à l'excursion de vitesse en dosant le carburant de manière à ralentir le rotor.

Toutefois, cette chaîne de régulation de carburant n'est, en général, pas suffisante pour garantir le maintien en dessous d'une vitesse raisonnable pour les cas extrêmes, tel qu'une rupture totale et instantanée de la transmission entre une turbine à gaz et un récepteur.

De plus, la chaîne de régulation de carburant ne présente pas un temps de réaction suffisant pour permettre de couvrir tous les cas de baisse de charge.

Il est également connu d'utiliser des dispositifs de protection mécanique, tel que le plumage de pales, connu sous le nom de « blade-shedding » en anglais, qui consiste à dimensionner les pales de turbines à gaz de sorte qu'elles se rompent avant le disque. Ceci entraine la génération de débris, mais dont l'énergie est suffisamment basse pour pouvoir être contenus dans le moteur. La turbine à gaz, ainsi privée de ses pales, ne peut plus récupérer l'énergie des gaz, ce qui entraine une décélération du rotor.

Cependant, le « blade-shedding » nécessite un dimensionnement mécanique précis, ainsi qu'une maîtrise de procédés très avancés, afin de démontrer une vitesse de rupture des pales qui soit fiable et répétable.

De plus, ce dispositif entraine le besoin d'un blindage permettant de retenir les pales et la perte du moteur en cas de survitesse importante. Néanmoins, un tel blindage induit une masse supplémentaire.

Il est également connu d'utiliser un dispositif de protection, appelé dispositif de protection de survitesse électronique, configuré pour cesser l'alimentation en carburant de façon automatique, en quelques dizaines de millisecondes, lorsque la vitesse de rotation du rotor de la turbine à gaz dépasse un seuil prédéterminé.

Toutefois, la coupure de survitesse électronique est un seuil, qui ne peut être positionné qu'au-delà de la vitesse maximale d'utilisation normale de la turbine à gaz. De ce fait, la vitesse maximale atteinte est subie en fonction du seuil de coupure de survitesse électronique et du taux d'accélération instantané du rotor de la turbine à gaz au moment de la coupure de l'alimentation en carburant.

De plus, si le moteur n'est pas muni d'un dispositif de « blade-shedding », cette vitesse maximale atteinte dimensionne la vitesse d'intégrité à démontrer pour les disques de turbines, et donc leur masse.

### Résumé de l'invention

L'invention a pour objectif de proposer une solution permettant de remédier à au moins certains de ces inconvénients.

En particulier, la présente invention propose de diminuer l'amplitude de l'excursion de vitesse et ainsi de permettre aux dispositifs assurant le dosage de carburant de réagir.

Pour cela, l'invention consiste, dans les cas où au moins un générateur électrique reste entraîné mécaniquement par la turbine à gaz, à l'utiliser pour créer une charge résistive supplémentaire sur la turbine à gaz.

À cet effet, l'invention concerne un système propulsif hybride pour un aéronef à voilure tournante multi-rotors, comprenant :
- un moteur à combustion interne, pouvant par exemple être une turbine à gaz à turbine liée, à turbine libre ou un moteur à piston,
- au moins une machine électrique accouplée au moteur à combustion interne de sorte qu'en fonctionnement le moteur à combustion interne entraîne la machine électrique,
- un redresseur relié à la machine électrique et configuré pour convertir un courant alternatif délivré par la machine électrique en un courant continu,
- des moyens de conversion du courant continu en courant alternatif,
- un réseau électrique reliant le redresseur aux moyens de conversion,
- des moteurs électriques reliés aux moyens de conversion de sorte qu'en fonctionnement les moyens de conversion alimentent les moteurs électriques en courant alternatif,
- des hélices accouplées aux moteurs électriques de sorte qu'en fonctionnement les moteurs électriques entraînent les hélices,

le système étant caractérisé en ce qu'il comprend :
   - des moyens de détection configurés pour détecter une diminution d'une demande de puissance électrique au sein du système en dessous d'une valeur prédéterminée,
   - des moyens de mise en court-circuit configurés pour court-circuiter la machine électrique lorsqu'une diminution de la demande de puissance électrique est détectée par les moyens de détection,
et en ce que le redresseur est actif et comporte les moyens de mise en court-circuit.

Le système selon l'invention permet de limiter l'excursion en survitesse du moteur à combustion interne, par exemple une turbine à gaz, en cas de chute brutale de demande de la puissance électrique.

En effet, une diminution de demande de puissance électrique a pour conséquence que le couple résistif exercé sur le rotor de la turbine à gaz diminue, et donc on observe une survitesse du rotor de la turbine à gaz. Les moyens de mise en court-circuit permettent d'utiliser la machine électrique pour créer une charge résistive supplémentaire sur la turbine à gaz. Ceci permet avantageusement de diminuer l'amplitude de l'excursion de vitesse.

De façon avantageuse, les moyens de détection peuvent détecter tous types de défauts ou chute de puissance électrique qui doit entraîner un freinage pour éviter la survitesse du rotor de la turbine à gaz.

En fonction de l'aéronef et des cas de chute de puissance, ce système permet d'éviter l'activation de dispositifs de protection mécanique ou électronique en survitesse qui entraînerait une perte de la turbine.

Ce système permet également de protéger mécaniquement la ou les machines électriques, en limitant l'excursion en vitesse globale du système, ces dernières acceptant généralement des vitesses maximales extrêmes inférieures aux turbines à gaz, notamment de par les contraintes technologiques inhérentes à ce type de machines électriques.

Ce système permet aussi de lisser les profils d'accélération dans les cas d'utilisation « normale ».

La détection d'une diminution d'une demande de puissance électrique au sein du système peut être réalisée de façon électronique.

Les moyens de mise en court-circuit peuvent comprendre un court-circuiteur.

Les moyens de mise en court-circuit peuvent être électromécaniques ou statiques.

Le système peut également comporter des moyens de stockage d'énergie électrique reliés au réseau électrique et configurés pour injecter un courant continu à la machine électrique.

Selon un mode de réalisation, les moyens de stockage d'énergie électrique sont configurés pour injecter un courant continu directement à la machine électrique.

Le système peut également comporter au moins un conducteur ohmique agencé entre les moyens de stockage d'énergie électrique et la machine électrique.

Le système peut également comporter des moyens de commutation agencés entre le conducteur ohmique et la machine électrique.

Selon un autre mode de réalisation, le redresseur est réversible et configuré pour injecter un courant continu provenant des moyens de stockage d'énergie électrique aux bornes de la machine électrique.

Autrement dit, les moyens de stockage d'énergie électrique sont configurés pour injecter un courant continu à la machine électrique de façon indirecte.

Le système peut également comporter un hacheur élévateur agencé entre les moyens de stockage d'énergie électrique et le redresseur.

L'invention concerne également un aéronef à voilure tournante multi-rotors, comprenant un système propulsif hybride selon l'invention.

L'invention concerne également un procédé de contrôle d'un système propulsif hybride selon l'invention, comprenant les étapes consistant en :
- une détection d'une diminution d'une demande de puissance électrique au sein du système en dessous d'une valeur prédéterminée, et
- une mise en court-circuit de la machine électrique en fonction de la diminution de la demande de puissance électrique au sein du système détectée.

### Brève description des figures

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
[Fig. 1] la figure 1 représente schématiquement un système propulsif hybride selon l'art antérieur,
[Fig. 2] la figure 2 représente schématiquement une partie d'un système propulsif hybride selon un exemple illustratif,
[Fig. 3] la figure 3 représente schématiquement une partie d'un système propulsif hybride selon un autre mode de réalisation de l'invention,
[Fig. 4] la figure 4 représente schématiquement un système propulsif hybride selon un mode de réalisation de l'invention, et
[Fig. 5] la figure 5 représente schématiquement un système propulsif hybride selon un autre mode de réalisation de l'invention.

Les éléments ayant les mêmes fonctions dans les différentes mises en oeuvre ont les mêmes références dans les figures.

### Description détaillée de l'invention

Les figures 2 à 5 représentent un système propulsif hybride 100 d'un aéronef, par exemple de type hélicoptère ou avion, à voilure tournante multi-rotors selon l'invention.

Un moteur 112 à combustion interne, telle qu'une turbomachine, par exemple un groupe auxiliaire de puissance (APU, acronyme de l'expression anglaise « Auxiliary Power Unit »), est accouplé à une machine électrique, par exemple à un générateur électrique 114. Le moteur 112 peut comporter une turbine à gaz. En fonctionnement, le générateur électrique 114 est entraîné par le moteur 112.

Le générateur électrique 114 peut être un moteur-générateur, c'est-à-dire qu'il peut être apte à fonctionner à la fois en mode générateur, notamment lorsqu'il est entraîné par le moteur 112, et en mode moteur. Ainsi, le générateur électrique 114 peut être une machine électrique réversible. Le générateur électrique 114 peut alors permettre une conversion bidirectionnelle de l'énergie mécanique-électrique, c'est-à-dire une conversion mécanique-électrique et une conversion électrique-mécanique. Le générateur électrique 114 peut générer un courant électrique polyphasé, par exemple triphasé comme représenté sur les figures 2 à 5.

Le moteur 112 et le générateur électrique 114 constituent une source de génération principale pour le système 100. Bien qu'une seule source de génération principale soit représentée sur les figures 2 à 5, le système 100 peut comprendre une pluralité de sources de génération principales.

La vitesse de rotation N1 de l'arbre du rotor du moteur 112 relié au générateur électrique 114 peut être contrôlée par des moyens de commande 102 (EECU, de l'expression anglaise « Electronic Engine Control Unit »). Ces moyens de commande 102 peuvent contrôler des paramètres du moteur 112, tels que le débit carburant, noté WF, sur la base de la vitesse de rotation N1 et d'autres paramètres, comme la fréquence N1* du générateur électrique 114 ou une anticipation de la charge Ω1^{∗}, Ω2^{∗}, Ω3^{∗}, Ω4^{∗} pour chaque chaîne de propulsion électrique.

La tension de sortie U114 du générateur électrique 114 peut être contrôlée par des moyens de commande 115 (GCU, de l'expression anglaise « Generator Control Unit »). Ces moyens de commande 115 sont des calculateurs qui contiennent un régulateur de tension et un ensemble de circuits de contrôle et de protection qui assurent une performance du système en toutes conditions. Les moyens de commande 115 peuvent être équipé d'une électronique de contrôle analogique ou numérique, en fonction des besoins du système. Ces moyens de commande 115 peuvent contrôler des paramètres du générateur électrique 114, tels que l'intensité 1114 du générateur électrique, sur la base d'une consigne de tension U* et de la tension de sortie U114 du générateur électrique 114.

Une boite de vitesse auxiliaire 106, classiquement un réducteur ou multiplicateur de vitesse à rapport fixe, peut être agencée entre le moteur 112 et le générateur électrique 114 afin d'adapter le niveau de vitesse de la génératrice électrique 114.

Un redresseur 116 est relié à une entrée au générateur électrique 114 et configuré pour convertir le courant alternatif délivré par le générateur électrique 114 en un courant continu. Le redresseur 116 peut être réversible en courant. Le redresseur 116 peut être un redresseur actif. Un élément capacitif 130, par exemple un condensateur, peut être agencé en parallèle au redresseur 116.

Un réseau électrique 120 relie en parallèle une sortie du redresseur 116 à des entrées de moyens de conversion 118a, 118b, 118c, 118d.

Les moyens de conversion 118a, 118b, 118c, 118d sont configurés pour convertir un courant continu en un courant alternatif. Les moyens de conversion 118a, 118b, 118c, 118d peuvent comprendre des convertisseurs de courant continu en courant alternatif.

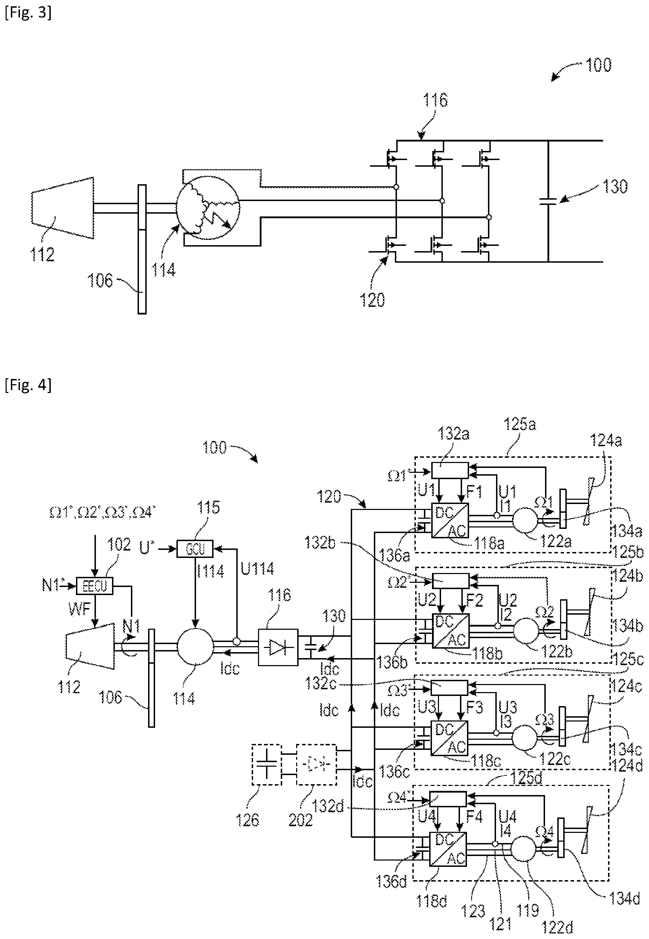

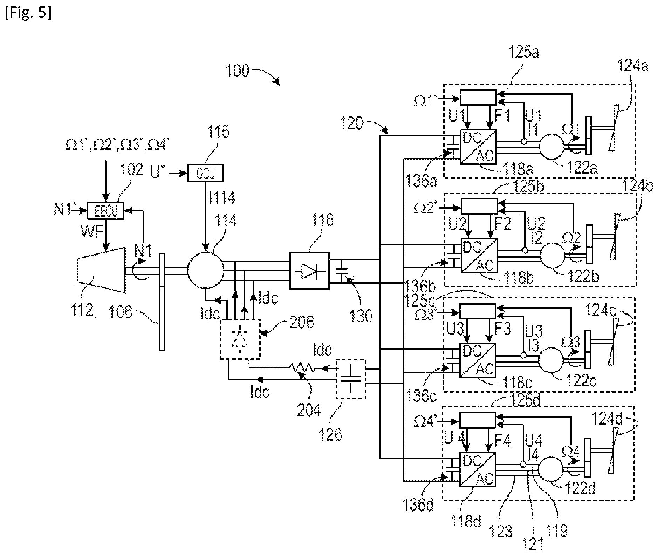

Les moyens de conversion 118a, 118b, 118c, 118d peuvent comprendre des onduleurs. Sur les figures 4 et 5, DC signifie courant continu (de l'expression anglaise « Discret Current ») et AC signifie courant alternatif (de l'expression anglaise « Alternative Current »). Chaque onduleur peut comprendre trois bras d'onduleurs délivrant respectivement les trois phases 119, 121, 123 (référencées uniquement pour les moyens de conversion 118d) de courant alternatif à chacun des moteurs électriques 122a, 122b, 122c, 122d.

Les moyens de conversion 118a, 118b, 118c, 118d, et en particulier les onduleurs, peuvent être réversibles en courant. Un élément capacitif 136a, 136b, 136c, 136d, par exemple un condensateur, peut être agencé en parallèle de chacun des moyens de conversion 118a, 118b, 118c, 118d.

Le réseau électrique 120 peut être bidirectionnel, c'est-à-dire que le courant électrique peut passer du redresseur 116 aux moyens de conversion 118a, 118b, 118c, 118d, et dans le sens opposé.

Des moteurs électriques 122a, 122b, 122c, 122d sont reliés au moyens de conversion 118a, 118b, 118c, 118d. En fonctionnement, les moteurs électriques 122a, 122b, 122c, 122d sont alimentés en courant alternatif par les moyens de conversion 118a, 118b, 118c, 118d.

Les moteurs électriques 122a, 122b, 122c, 122d peuvent être des moteurs synchrones polyphasés. Ces moteurs peuvent être de différents types, tels que des moteurs à induction ou des moteurs à reluctance variable. Ces moteurs peuvent être du type mono-stator et multi-rotors. Ceci permet avantageusement de réduire la masse et le volume des moteurs électriques 122a, 122b, 122c, 122d.

La liaison entre le générateur électrique 114 et les moteurs électriques 122a, 122b, 122c, 122d est opérée en courant continu, sous une tension relativement élevée, de manière à améliorer la stabilité du réseau électrique 120 et la gestion de puissance. Le redresseur 116 permet ainsi d'assurer la conversion du courant alternatif délivré par le générateur électrique 120 en en courant continu, tandis que les moyens de conversion 118a, 118b, 118c, 118d assurent la conversion de ce courant continu en courant alternatif destiné aux moteurs électriques 122a, 122b, 122c, 122d.

Des hélices 124a, 124b, 124c, 124d sont accouplées aux moteurs électriques 122a, 122b, 122c, 122d. En fonctionnement, les hélices 124a, 124b, 124c, 124d sont entraînées par les moteurs électriques 122a, 122b, 122c, 122d. Les hélices 124a, 124b, 124c, 124d peuvent être des hélices contra rotatives coaxiales.

En particulier, les moyens de conversion 118a, respectivement 118b, 118c, 118d, le moteur électrique 122a, respectivement 122b, 122c, 122d, et la ou les hélices 124a, respectivement 124b, 124c, 124d, forment une chaîne de propulsion électrique 125a, respectivement 125b, 125c, 125d. Sur les figures 2 et 3, il y a donc quatre chaînes de propulsion électrique 125a, 125b, 125c, 125d.

Pour chaque chaîne de propulsion électrique 125a, 125b, 125c, 125d, la vitesse de rotation Ω1, Ω2, Ω3, Ω4 de l'arbre reliant le moteur électrique 122a, 122b, 122c, 122d et les hélices 124a, 124b, 124c, 124d, via une boite de vitesse, ou plus classiquement un réducteur ou un multiplicateur de vitesse à rapport fixe, 134a, 134b, 134c, 134d, peut être contrôlée par des moyens de commande 132a, 132b, 132c, 132d. De même, la tension U1, U2, U3, U4 et l'intensité I1, I2, I3, I4 issue des moyens de conversion 118a, 118b, 118c, 118d pour alimenter chaque moteur électrique 122a, 122b, 122c, 122d peut être contrôlée par des moyens de commande 132a, 132b, 132c, 132d. Ces moyens de commande 132a, 132b, 132c, 132d peuvent contrôler des paramètres des moyens de conversion 118a, 118b, 118c, 118d, tels que la tension U1, U2, U3, U4 des moteurs électriques 122a, 122b, 122c, 122d et les consignes en fréquence image de la vitesse de rotation, notés F1, F2, F3, F4, sur la base de la vitesse de rotation Ω1, Ω2, Ω3, Ω4, de la tension U1, U2, U3, U4 et de l'intensité I1, I2, I3, I4 des moteurs électriques 122a, 122b, 122c, 122d, et d'autres paramètres, comme l'anticipation de la charge Ω1^{∗}, Ω2^{∗}, Ω3^{∗}, Ω4^{∗}.

Des moyens de stockage d'énergie électrique 126 sont reliés au réseau électrique 120. Ces moyens de stockage 126 permettent d'absorber un surplus d'énergie électrique provenant du bus HVDC du réseau électrique 120. Les moyens de stockage 126 peuvent aussi être configurés pour alimenter temporairement les moteurs électriques 122a, 122b, 122c, 122d en complétant ou en se substituant au générateur électrique 114.

Les moyens de stockage 126 peuvent être reliés en parallèle au réseau électrique 120.

Les moyens de stockage 126 peuvent comprendre une ou une pluralité de batteries, un ou une pluralité de condensateurs, ou un ou une pluralité de super-condensateurs.

En cas de perte d'un bobinage du générateur électrique 114, de perte complète du générateur électrique 114, de perte d'un bras du redresseur 116 ou des moyens de conversion 118a, 118b, 118b, 118d, de perte d'une hélice 124a, 124b, 124c, 124d, ou de rupture de la transmission entre la turbine à gaz 112 et le générateur électrique 114, il y a une chute de demande de puissance électrique dans le système 100. Cette diminution de demande de puissance électrique a pour conséquence que le couple résistif exercé sur le rotor de la turbine à gaz 112 diminue, et donc on observe une survitesse du rotor de la turbine à gaz 112.

La présente invention consiste, dans les cas où le ou les générateurs électriques 114 restent entraînés mécaniquement par la turbine à gaz 112, c'est-à-dire que le ou les générateurs électriques 114 sont dans un état de fonctionnement nominal sans défaillance, à l'utiliser pour créer une charge résistive supplémentaire sur la turbine à gaz 112. Ceci permet de diminuer l'amplitude de l'excursion de vitesse. Autrement dit, l'utilisation du ou de ces générateurs électriques 114 permet de créer un couple résistant suffisant afin que la turbine à gaz 112 ne parte pas en survitesse.

Afin d'éviter une survitesse du rotor de la turbine à gaz 112, le système 100 comporte des moyens de détection configurés pour détecter une diminution d'une demande de puissance électrique au sein du système en dessous d'une valeur prédéterminée.

La détection d'une diminution d'une demande de puissance électrique au sein du système peut être réalisée de façon électronique.

Le système 100 comporte également des moyens de mise en court-circuit 200 configurés pour court-circuiter la machine électrique, c'est-à-dire le générateur électrique 114, lorsqu'une diminution de la demande de puissance électrique est détectée par les moyens de détection. En particulier, les moyens de mise en court-circuit 200 peuvent mettre en court-circuit la ou les phases du générateur électrique 114 encore liées mécaniquement à la turbine à gaz 112. Ces moyens de mise en court-circuit, également appelés court-circuiteur, permettent ainsi de créer un couple résistant transitoire.

L'exemple de réalisation représenté en figure 2 ne relève pas de l'invention et n'est présent qu'à titre illustratif. Selon l'exemple, les moyens de mise en court-circuit 200 sont agencés entre le générateur électrique 114 et le redresseur 116.

Les moyens de mise en court-circuit 200 peuvent être électromécaniques ou statiques.

La durée de la commande de fermeture du court-circuiteur 200 peut être inférieure à une dizaine de millisecondes. En particulier, la commande peut être envoyée par un canal de communication avec une gamme de fréquence élevée, c'est-à-dire de l'ordre du MHz, via l'électronique de contrôle 117 du redresseur 116 actif ou par une unité de contrôle électronique (ECU, de l'expression anglaise « Electronic Control Unit »).

Le temps de commutation du court-circuiteur 200 peut être inférieur à 1 ms. Par exemple, le court-circuiteur 200 peut comprendre un interrupteur pyrotechnique, ou un composant statique du type contrôleur de puissance à semi-conducteurs (SSPC, de l'expression anglaise « Solid State Power Controllers »), ou un thyristor.

Comme représenté en figure 3, le redresseur 116 comporte les moyens de mise en court-circuit. Autrement dit, si le calibre en courant des transistors du redresseur 116 le permet, le redresseur 116 actif a un rôle de court-circuiteur.

Afin d'avoir un couple résistant plus important que le couple résistant produit par la mise en court-circuit des bobinages d'un générateur électrique, un freinage électromagnétique peut être réalisé au moyen du redresseur 116.

Ce mode de réalisation est représenté en figure 4.

Le redresseur 116 est de nature réversible en courant.

Les moyens de stockage 126 sont configurés pour injecter un courant continu au générateur électrique 114. Le redresseur 116 est configuré pour injecter le courant continu provenant des moyens de stockage 126 aux bornes du générateur électrique 114. Autrement dit, les moyens de stockage 126 sont configurés pour injecter un courant continu au générateur électrique 114 de façon indirecte, c'est-à-dire via le redresseur 116. Il s'agit ainsi d'un freinage électromagnétique avec changement de quadrant du redresseur 116.

En particulier, le freinage électromagnétique est réalisé par injection du courant continu sur les bornes des bobinages statoriques, c'est-à-dire aux bornes du stator, du générateur électrique 114, grâce à la présence des moyens de stockage 126 sur le bus HVDC du réseau électrique 120.

Sur la figure 4, la réinjection de courant continu est représentée par les flèches Idc.

Le générateur électrique 114 se comporte alors comme un frein à courant de Foucault. Le freinage se produit sur une durée courte, de l'ordre d'une seconde, ce qui donne le temps de contrôler le régime de la turbine à gaz 112. L'énergie de dissipation thermique des courants de Foucault dans les parties fixes du générateur électrique 114 sont considérées comme négligeables, c'est-à-dire qu'il n'est pas nécessaire d'avoir un refroidissement supplémentaire du générateur électrique 114.

La tension électrique aux bornes des moyens de stockage 126 est supérieure à la tension électrique en sortie du générateur électrique 114. Si cette condition n'est pas remplie, le système peut comporter un hacheur 202, du type élévateur, agencé entre les moyens de stockage 126 et le redresseur 116.

La figure 5 représente une variante au mode de réalisation de la figure 4.

Dans cette variante, les moyens de stockage 126 sont configurés pour injecter directement un courant continu sur les phases du générateur électrique 114. Il s'agit ainsi d'un freinage électromagnétique avec connexion directe des moyens de stockage 126 sur les phases du générateur électrique 114. Cette variante est avantageusement moins complexe dans son pilotage que le mode de réalisation de la figure 4.

Sur la figure 5, la réinjection de courant continu est représentée par les flèches Idc.

Le système 100 peut comporter au moins un conducteur ohmique 204, c'est-à-dire une résistance, agencé entre les moyens de stockage 126 et le générateur électrique 114. Autrement dit, l'injection de courant continu peut s'effectuer au travers d'une résistance limitant le courant, également appelée résistance de limitation.

Le système 100 peut comporter des moyens de commutation 206 agencés entre le conducteur ohmique 204 et le générateur électrique 114, et notamment des moyens de commutation rapide, c'est-à-dire dont le temps de réactivité est inférieur à environ 5 ms. Par exemple, les moyens de commutation 206 peuvent comprendre un interrupteur pyrotechnique, ou un SSPC, ou un thyristor.

Lorsque la tension électrique aux bornes des moyens de stockage 126 est inférieure à la tension électrique de phase du générateur électrique 114, les moyens de commutation 206 et le conducteur ohmique 204 peuvent être remplacés par un hacheur élévateur.

Comme représenté sur la figure 5, quatre bornes de sorties des moyens de commutation 206 sont reliées au générateur électrique 114 de manière à ramener, au noeud du bobinage du générateur électrique 114, le potentiel négatif aux moyens de stockage 126.

L'invention concerne également un procédé de contrôle d'un système 100 tel que décrit précédemment.

Le procédé comprend une étape de détection d'une diminution d'une demande de puissance électrique au sein du système 100 en dessous d'une valeur prédéterminée. La détection peut être réalisée de façon électronique. La détection d'une telle diminution peut faire suite à une perte d'un bobinage ou une perte complète du générateur électrique 114, à une perte d'un bras du redresseur 116 ou des moyens de conversion 118a, 118b, 118b, 118d, à une perte d'une hélice 124a, 124b, 124c, 124d, ou à une rupture de la transmission entre la turbine à gaz 112 et le générateur électrique 114.

Puis, le procédé comprend une étape de mise en court-circuit du générateur électrique 114 en fonction de la diminution de la demande de puissance électrique au sein du système détectée.

Ensuite, le procédé peut comprendre une étape d'injection d'un courant continu issu des moyens de stockage 126 au générateur électrique 114, soit directement, soit via le redresseur 116.

## Revendications

1. Système propulsif hybride (100) pour un aéronef à voilure tournante multi-rotors, comprenant :
- un moteur (112) à combustion interne,
- au moins une machine électrique (114) accouplée au moteur à combustion interne de sorte qu'en fonctionnement le moteur à combustion interne entraîne la machine électrique,
- un redresseur (116) relié à la machine électrique et configuré pour convertir un courant alternatif délivré par la machine électrique en un courant continu,
- des moyens de conversion (118a, 188b, 188c, 118d) du courant continu en courant alternatif,
- un réseau électrique (120) reliant le redresseur aux moyens de conversion,
- des moteurs électriques (122a, 122b, 122c, 122d) reliés aux moyens de conversion de sorte qu'en fonctionnement les moyens de conversion alimentent les moteurs électriques en courant alternatif,
- des hélices (124a, 124b, 124c, 124d) accouplées aux moteurs électriques de sorte qu'en fonctionnement les moteurs électriques entraînent les hélices,
le système étant **caractérisé en ce qu'**il comprend :
- des moyens de détection configurés pour détecter une diminution d'une demande de puissance électrique au sein du système en dessous d'une valeur prédéterminée,
- des moyens de mise en court-circuit (200) configurés pour court-circuiter la machine électrique lorsqu'une diminution de la demande de puissance électrique est détectée par les moyens de détection,
et **en ce que** le redresseur (116) est actif et comporte les moyens de mise en court-circuit (200).

2. Système propulsif hybride (100) selon l'une des revendications précédentes, comprenant également des moyens de stockage d'énergie électrique (126) reliés au réseau électrique (120) et configurés pour injecter un courant continu à la machine électrique (114).

3. Système propulsif hybride (100) selon la revendication 2, comprenant au moins un conducteur ohmique (204) agencé entre les moyens de stockage d'énergie électrique (126) et la machine électrique (114).

4. Système propulsif hybride (100) selon la revendication 3, comprenant des moyens de commutation (206) agencés entre le conducteur ohmique (204) et la machine électrique (114).

5. Système propulsif hybride (100) selon la revendication 4, dans lequel le redresseur (116) est réversible et configuré pour injecter un courant continu provenant des moyens de stockage d'énergie électrique (126) aux bornes de la machine électrique (114).

6. Système propulsif hybride (100) selon la revendication 5, comprenant un hacheur élévateur (202) agencé entre les moyens de stockage d'énergie électrique (126) et le redresseur (116).

7. Aéronef à voilure tournante multi-rotors, comprenant un système propulsif hybride (100) selon l'une des revendications précédentes.

8. Procédé de contrôle d'un système propulsif hybride (100) selon l'une des revendications 1 à 6, comprenant les étapes consistant en :
- une détection d'une diminution d'une demande de puissance électrique au sein du système en dessous d'une valeur prédéterminée, et
- une mise en court-circuit de la machine électrique (114) en fonction de la diminution de la demande de puissance électrique au sein du système détectée.

## Patentansprüche

1. Hybridantriebssystem (100) für ein Mehrfachrotor-Drehflügelluftfahrzeug, umfassend:
- einen inneren Verbrennungsmotor (112),
- mindestens eine elektrische Maschine (114), die mit dem inneren Verbrennungsmotor derart gekoppelt ist, dass der innere Verbrennungsmotor im Betrieb die elektrische Maschine antreibt,
- einen Gleichrichter (116), der mit der elektrischen Maschine verbunden ist und konfiguriert ist, um einen von der elektrischen Maschine gelieferten Wechselstrom in einen Gleichstrom umzuwandeln,
- Umwandlungsmittel (118a, 188b, 188c, 118d) des Gleichstroms in Wechselstrom,
- ein Stromnetz (120), das den Gleichrichter mit den Umwandlungsmitteln verbindet,
- Elektromotoren (122a, 122b, 122c, 122d), die derart mit den Umwandlungsmitteln verbunden sind, dass die Umwandlungsmittel im Betrieb die Elektromotoren mit Wechselstrom versorgen,
- Propeller (124a, 124b, 124c, 124d), die derart mit den Elektromotoren gekoppelt sind, dass die Elektromotoren im Betrieb die Propeller antreiben,
wobei das System **dadurch gekennzeichnet ist, dass** es umfasst:
- Erfassungsmittel, die konfiguriert sind, um eine Verringerung einer Nachfrage nach elektrischer Leistung im System unterhalb eines vorbestimmten Werts zu erfassen,
- Kurzschlussmittel (200), die konfiguriert sind, um die elektrische Maschine kurzzuschließen, wenn eine Verringerung der Nachfrage nach elektrischer Leistung von den Erfassungsmitteln erfasst wird,
und dadurch, dass der Gleichrichter (116) aktiv ist und die Kurzschlussmittel (200) umfasst.

2. Hybridantriebssystem (100) nach einem der vorstehenden Ansprüche, das ebenfalls Mittel zum Speichern elektrischer Energie (126) umfasst, die mit dem Stromnetz (120) verbunden sind und konfiguriert sind, um einen Gleichstrom in die elektrische Maschine (114) einzuspeisen.

3. Hybridantriebssystem (100) nach Anspruch 2, umfassend mindestens einen ohmschen Leiter (204), der zwischen den Mitteln zum Speichern elektrischer Energie (126) und der elektrischen Maschine (114) eingerichtet ist.

4. Hybridantriebssystem (100) nach Anspruch 3, umfassend Umschaltmittel (206), die zwischen dem ohmschen Leiter (204) und der elektrischen Maschine (114) eingerichtet sind.

5. Hybridantriebssystem (100) nach Anspruch 4, wobei der Gleichrichter (116) reversibel ist und konfiguriert ist, um einen von den Mitteln zum Speichern elektrischer Energie (126) stammenden Gleichstrom in die Anschlüsse der elektrischen Maschine (114) einzuspeisen.

6. Hybridantriebssystem (100) nach Anspruch 5, umfassend einen Hochsetzsteller-Zerhacker (202), der zwischen den Mitteln zum Speichern elektrischer Energie (126) und dem Gleichrichter (116) eingerichtet ist.

7. Mehrfachrotor-Drehflügelluftfahrzeug, umfassend ein Hybridantriebssystem (100) nach einem der vorstehenden Ansprüche.

8. Verfahren zur Steuerung eines Hybridantriebssystems (100) nach einem der Ansprüche 1 bis 6, umfassend die Schritte, die bestehen aus:
- einer Erfassung einer Verringerung einer Nachfrage nach elektrischer Leistung im System unterhalb eines vorbestimmten Werts, und
- einem Kurzschließen der elektrischen Maschine (114) in Abhängigkeit von der erfassten Verringerung der Nachfrage nach elektrischer Leistung im System.

## Claims

1. A hybrid propulsion system (100) for a multi-rotor rotary wing aircraft, comprising:
- an internal combustion engine (112),
- at least one electric machine (114) coupled to the internal combustion engine so that in operation the internal combustion engine drives the electric machine,
- a rectifier (116) connected to the electric machine and configured to convert an alternative current delivered from the electric machine into a direct current,
- means (118a, 188b, 188c, 118d) for converting direct current into alternative current,
- an electrical network (120) connecting the rectifier to the conversion means,
- electric motors (122a, 122b, 122c, 122d) connected to the conversion means so that in operation the conversion means supply the electric motors with alternative current,
- propellers (124a, 124b, 124c, 124d) coupled to the electric motors so that in operation the electric motors drive the propellers,
The system being **characterized in that** it comprises:
- detection means configured to detect a reduction in a demand for electrical power within the system below a predetermined value,
- short-circuit means (200) configured to short-circuit the electric machine when the detection means detects a reduction in the demand for electrical power,
and **in that** the rectifier (116) is active and comprises the short-circuit means (200).

2. The hybrid propulsion system (100) according to any of the preceding claims, also comprising electrical energy storage means (126) connected to the electrical network (120) and configured to inject a direct current to the electric machine (114).

3. The hybrid propulsion system (100) according to claim 2, comprising at least one ohmic conductor (204) arranged between the electrical energy storage means (126) and the electric machine (114).

4. The hybrid propulsion system (100) according to claim 3, comprising switching means (206) arranged between the ohmic conductor (204) and the electric machine (114).

5. The hybrid propulsion system (100) according to claim 4, wherein the rectifier (116) is reversible and configured to inject a direct current from the electrical energy storage means (126) to the terminals of the electric machine (114).

6. The hybrid propulsion system (100) according to claim 5, comprising a boost chopper (202) arranged between the electrical energy storage means (126) and the rectifier (116).

7. A multi-rotor rotary wing aircraft, comprising a hybrid propulsion system (100) according to one of the preceding claims.

8. A method for controlling a hybrid propulsion system (100) according to any of claims 1 to 6, comprising the steps of:
- detecting a reduction in a demand for electrical power within the system below a predetermined value, and
- short-circuiting the electric machine (114) in accordance with the detected reduction in the demand for electrical power within the system.
